# EUROPEAN PATENT APPLICATION

(11) **EP 4 439 868 A1**
(43) Date of publication of application: **02.10.2024**
(21) Application number: 24163294.2
(22) Date of filing: 13.03.2024
(51) Int. Cl.: H01R 4/34, H01R 9/18, B60L 53/16

(54) **CHARGING INPUT ELECTRICAL CONNECTOR FOR A VEHICLE**

(30) Priority: 13.03.2023 FR 2302316
(71) Applicant: Tyco Electronics France SAS, 95300 Pontoise (FR)
(72) Inventor: PAMART, Olivier, 95300 Pontoise (FR); DUPONT, Bruno, 95300 Pontoise (FR)
(74) Representative: Grünecker Patent- und Rechtsanwälte PartG mbB

(57) **Abstract**

The invention relates to a charging input electrical connector (1) for a vehicle, the electrical connector (1) being configured to receive, in a coupling direction (A), a movable homologous connector of a charging station, the electrical connector (1) comprising a connector casing (100), a connector for a rigid monoconductor (200), and an electrical terminal (300), in particular an electrical terminal (300) configured for electrical currents of at least 100A. The connector (1) is characterised in that the electrical terminal (300) is screwed with a rigid monoconductor terminal (209) of the connector for rigid monoconductor (200), so as to clamp at least one part of the connector casing (100) between the electrical terminal (300) and the connector for rigid monoconductor (200). The invention moreover relates to an electrical terminal for such a vehicle charging input electrical connector, and a method for assembling such a vehicle charging input electrical connector.

## Description

The present invention relates to a charging input electrical connector for a vehicle. The invention also relates to an electrical terminal for such a connector, in particular configured for electrical currents of at least 100A, as well as a method for assembling such a connector.

It is known in the art to provide, for various types of electric and hybrid vehicles, a charging input electrical connector for charging the battery of said vehicle. Typically, such an electrical connector comprises a connector casing arranged at the chassis of the vehicle and at least one electrical terminal. In particular, the connector is arranged such that a first side is oriented towards the outside of the chassis, and that a second side is oriented towards the inside of the chassis.

The electrical connector is configured to receive, on the first side, a movable homologous connector, for example a charging gun belonging to a charging station, in order to couple the electrical terminal with a homologous electrical terminal of the movable homologous connector. On the second side, the electrical connector can be electrically linked to the battery by a set of rigid monoconductors, also called "bus-bars". Rigid monoconductors are in particular used for "rapid" battery charging by direct electrical current (DC) with high current intensity, for example, more than 100A.

More and more, in order to respect the constraints of electrical safety and size, the path of the set of rigid monoconductors through the inside of the chassis of the vehicle increases in complexity and length. This leads to installation, inspection and maintenance difficulties.

Moreover, it is usual to weld or rivet the ends of the rigid monoconductors to the respective electrical terminals of the electrical connector, fixing the set of rigid monoconductors to the electrical connector. The maintenance difficulties are thus extended to the charging input electrical connector. It can, in particular, become necessary to integrally dismount the set of rigid monoconductors to exchange parts of the electrical connector.

Given the above, the present invention aims to provide an improved charging input electrical connector, in particular enabling quicker and simpler maintenance operations.

The aim of the invention is achieved by means of a charging input electrical connector of a vehicle according to the present disclosure. The electrical connector is configured to receive, in a coupling direction, a movable homologous connector of a charging station, and comprises a connector casing, a connector for a rigid monoconductor, and an electrical terminal, in particular an electrical terminal configured for electrical currents of at least 100A.

The connector casing has a first side and a second side opposite the first side, the connector casing being configured to be arranged at a chassis of the vehicle, such that the second side is oriented towards the inside of the chassis, the first side comprising a first coupling structure configured for a coupling of the connector casing with the homologous connector, and the second side comprising a second coupling structure configured for a coupling of the connector casing with the connector for rigid monoconductor. The connector casing comprises a cavity extending in the coupling direction of the first coupling structure to the second coupling structure, the electrical terminal being arranged in the cavity. The connector for rigid monoconductor comprises a rigid monoconductor terminal.

The electrical connector is characterised in that the electrical terminal is screwed with the rigid monoconductor terminal so as to clamp at least one part of the connector casing between the electrical terminal and the connector for rigid monoconductor.

According to this configuration of the inventive electrical connector, the fixing of the electrical terminal to the rigid monoconductor and to the connector casing is obtained by a screwing. In particular, the electrical terminal being arranged in the cavity, it can be screwed on the first side of the casing from the outside of the chassis, through the connector casing, with a terminal of a rigid monoconductor positioned on the second side of the casing, inside the chassis. Thus, the electrical terminal can be exchanged rapidly and effectively, by an unscrewing and screwing operation performed from the outside of the chassis of the vehicle.

The electrical terminals being subjected to significant mechanical, thermal and electrical stresses during the charging of the battery, degradations of the terminals are more frequent and a replacement is sometimes necessary. The present invention improves the maintenance of the charging input connector by facilitating the exchange of the electrical terminals.

According to an aspect of the electrical connector, the rigid monoconductor terminal can comprise a screw and the electrical terminal comprises a nut configured to receive the screw, and the electrical terminal is screwed with the rigid monoconductor terminal by screwing the nut on the screw.

By arranging the electrical terminal with a nut, and the screwed rigid monoconductor terminal, the threads of the screw-nut connection are more protected. Indeed, the exchangeable electrical terminal screwed in the casing of the outside is more likely to incur bumps or other risk-introducing mechanical actions. Thus, the threading of the nut, or inner thread, is associated with the electrical terminal, and the more fragile outer thread is assigned to the rigid monoconductor terminal housed inside the chassis of the second side of the casing.

The invention also relates to an electrical terminal for a connector according to one of the aspects described below. The electrical terminal is, in particular, configured for electrical currents of at least 100A. The electrical terminal comprises a nut, a first part, and a second part, the first part having a first end of the electrical terminal, and the second part having a second end of the electrical terminal, the second end being opposite the first end, the first part of the electrical terminal being configured to come into contact with a homologous electrical terminal of the homologous electrical connector, and the nut being arranged at the second end. This electrical terminal allows an implementation in the vehicle charging input electrical connector according to the invention, thus achieving the advantages stated.

The optional technical features and the associated advantages described below can be freely combined one by one or adapted to particular embodiments, insofar as the scope of the invention such as described above is respected. In particular, the optional features of the inventive electrical terminal can also be assigned to the electrical terminal of the charging input electrical connector according to the invention.

According to an aspect of the invention, the electrical terminal can comprise a first part having a first end of the electrical terminal, and a second part having a second end of the electrical terminal, the second end being opposite the first end, the first part of the electrical terminal being configured to come into contact with a homologous electrical terminal of the homologous electrical connector, the nut being arranged at the second end.

In this configuration, the electrical terminal can be screwed through the connector casing. In particular, a screwing movement applied at the first end, outside of the chassis, can obtain a screwing with the rigid monoconductor terminal at the second end, inside the chassis.

According to an aspect of the invention, the electrical terminal is a male electrical terminal configured to be coupled with a female electrical terminal of the movable homologous connector. A male electrical terminal being thinner and lighter than a female terminal, the arrangement, and in particular the maintenance, of the electrical terminal at the vehicle can be facilitated.

According to an aspect of the invention, the electrical terminal can comprise an insulating tip arranged at the first end. The insulating tip can reduce the risk of electrocution for assemblers and for users of the vehicle at the charging input electrical connector.

According to an aspect of the invention, the screw of the bus terminal can comprise an insulating socket, in particular arranged at the end of the screw. The socket can reduce the risk of electrocution during the installation of the rigid monoconductor, and increases the workability of the connector for a rigid monoconductor.

According to an aspect of the invention, the electrical connector can comprise a plurality, in particular two, of said electrical terminals, and the connector for a rigid monoconductor can comprise a number of rigid monoconductor terminals equivalent to the number of electrical terminals. Two electrical terminals can make it possible to close a direct current electrical circuit. A plurality of electrical terminals can increase the transmissible power and the battery charging speed.

According to an aspect of the invention, the smallest outer diameter of the second part can be larger, in particular between 20% and 200% larger, than the largest outer diameter of the first part. The second part can thus be sufficiently wide to receive the nut. In particular, the second part being responsible for the fixing by screwing of the electrical terminal, the interfacial mechanical forces, for example from twisting, that are applied can be significant, and the larger diameter can enable an improved mechanical stability.

According to an aspect of the invention, the second part can comprise a projecting part, the projecting part having a larger diameter than the smallest outer diameter of the second part. The projecting part can create an abutment at the second part, the abutment enabling a form-fitting with the connector casing during the assembly by screwing of the electrical terminal with the connector for rigid monoconductor.

According to an aspect of the invention, the projecting part can project from the second part, at least on the side oriented towards the second end, in a step shape, in particular, perpendicularly. When the projecting part projects in a step shape, the abutment is better demarcated, and thus increases the mechanical stability of a form-fitting.

According to an aspect of the invention, the at least one part of the clamped casing can comprise a shape complementary to the step shape, the complementary shape projecting into the cavity, so as to establish a connection by form-fitting with the electrical terminal, in particular, such that the connection by form-fitting blocks a movement of the electrical terminal in the coupling direction.

Thus, the electrical terminal can abut with the connector casing during screwing. In particular, when the electrical terminal is inserted in the cavity and screwed with the rigid monoconductor terminal, the projecting part can abut on the complementary shape of the connector casing, establishing the connection by form-fitting. By screwing and moving the electrical terminal closer to the rigid monoconductor terminal, the at least one part of the connector casing can be clamped between the electrical terminal and the connector for rigid monoconductor.

According to an aspect of the invention, the projecting part can be arranged in a region for connecting the second part with the first part. The projecting part is thus removed from the nut at the second end and from the first end, and thus less at risk of interfering with the coupling with the rigid monoconductor terminal and/or with the coupling with the homologous connector.

According to an aspect of the invention, the electrical terminal can comprise a seal disposed at the projecting part, in particular an O-ring disposed along a circumference of the electrical terminal at the projecting part. The seal makes it possible to improve the sealing in the cavity, and thus creates a sealing between the inside and the outside of the vehicle.

According to an aspect of the invention, the first part comprises a clamping element, in particular a form element configured for the coupling with a clamping tool comprising a complementary form. In particular, the clamping element can be a triangular, pentagonal, heptagonal, or octagonal element centred on an axis of the electrical terminal. The clamping element can make it possible to limit the screwing and unscrewing of the electrical terminal with the rigid monoconductor terminal to the operators having a tool complementary to the clamping element. Thus, the clamping element can serve to facilitate the clamping of the electrical terminal, and at the same time, provide a foolproofing against unintended handling.

The invention moreover concerns a method for assembling a charging input electrical connector for a vehicle according to one of the aspects described above. The assembly method comprises the steps of a) assembling the connector casing, b) mounting the connector casing at a vehicle chassis, such that the second side is oriented towards the inside of the chassis, c) coupling of the connector for a rigid monoconductor with the second coupling structure, and d) screwing of the electrical terminal with the rigid monoconductor terminal, so as to clamp at least one part of the connector casing between the electrical terminal and the connector for a rigid monoconductor. Such as already described above, this is a quicker, more comfortable and less expensive method than the assembly methods of the prior art.

The aims, features and advantages of the invention such as outlined above will be more exhaustively understood and appreciated by studying the more detailed description below of an embodiment of the invention, using the accompanying drawings.
Figure 1 illustrates a connector casing and a connector for a rigid monoconductor for a charging input electrical connector for a vehicle according to an embodiment of the invention.
Figure 2 illustrates an electrical terminal according to an embodiment of the invention.
Figure 3 illustrates a charging input electrical connector for a vehicle according to an embodiment of the invention.
Figure 4 schematically illustrates the steps of an assembly method according to an embodiment of the invention.

Below, reference signs to identical figures are used to reference elements of the same nature.

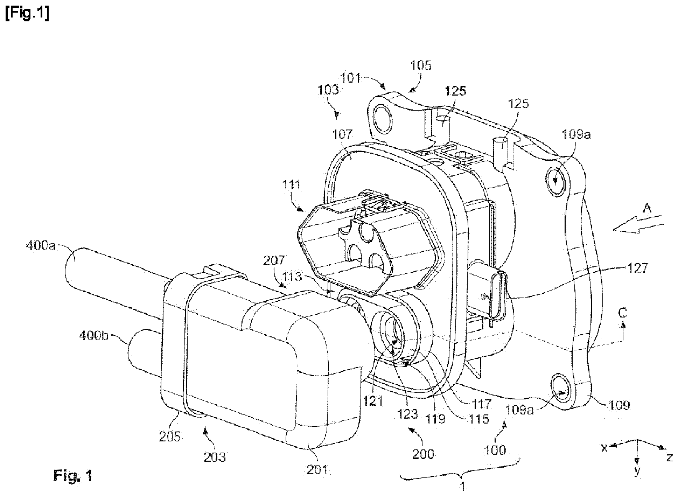

An electrical connector according to a first embodiment of the invention is described below, by referring to figures 1 to 3. The electrical connector 1 described and illustrated in figures 1 to 3 is a charging input connector of an electric motor vehicle. In this embodiment, the electrical connector 1 is a connector of a type called CCS (Combined Charging System), specifically a connector of the "CCS Combo 2" or "FF" type, such as defined by the standard IEC 62196. The electrical connector 1 therefore comprises a slow charging terminal, in particular called "Type 2", and two electrical terminals for a rapid direct current charge. In alternative embodiments of the invention, the electrical connector can be of the "EE" (or "CCS Combo 1"), "AA", "BB", or "ChaoJi" type, or of any other type which can be compliant with the terms of the invention described above and comprising at least one electrical terminal, in particular an electrical terminal configured for electrical currents of at least 100A.

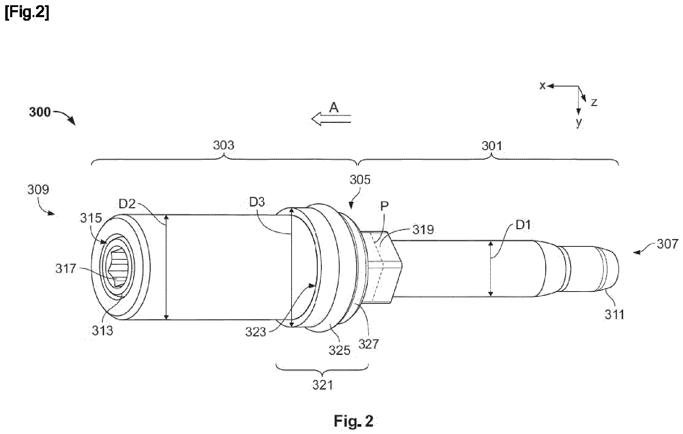

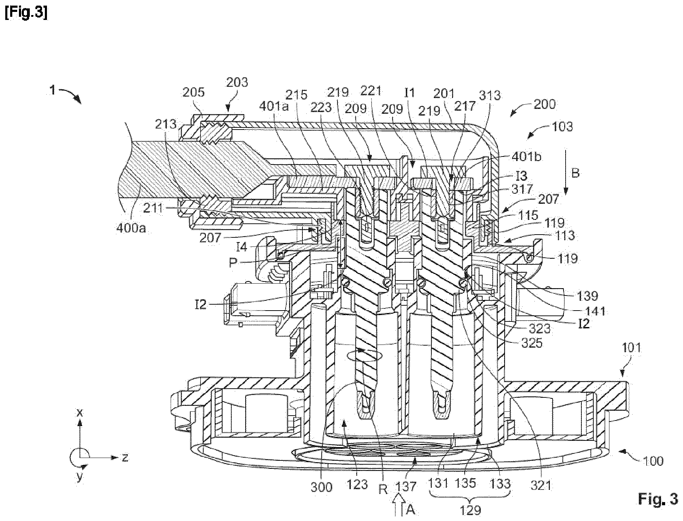

Figure 1 illustrates a perspective view of the electrical connector 1 during assembly. The electrical connector 1 comprises a connector casing 100, a connector for rigid monoconductor 200, and two electrical terminals 300. The electrical terminals 300 cannot be seen in figure 1, and will be described in reference to figure 2 and 3. The electrical connector 1 is configured to receive, in the coupling direction A parallel to the Cartesian direction x, the homologous connector of a charging station, i.e. a charging gun of the "FF", or CCS Combo 2 type.

The connector casing 100 has a first side 101 and a second side 103, visible in figure 1 and opposite the first side 101 in the coupling direction A. A surface 105 of the first side 101 is oriented against the coupling direction A, and a surface 107 of the second side 103 is oriented in the coupling direction A.

On the first side 101, the connector casing 100 comprises a mounting frame 109, comprising a plurality of, in particular four, fixing holes 109a to fix the connector casing 100 to a chassis of the electric vehicle. The connector casing 100 is configured to be arranged at the chassis, such that the second side 103, and in particular, the surface 107 are oriented towards the inside of the chassis, i.e. towards the inner space of the vehicle. Correspondingly, the connector casing 100 is configured to be arranged at the chassis, such that the first side 101 and, in particular, the surface 105 are oriented towards the outside of the chassis, i.e. towards the ambient environment, wherein the vehicle is located.

The second side 103 comprises, formed on the surface 107, an inner coupling zone 111 for the slow charging terminal mentioned above, and a second coupling structure 113. The second coupling structure 113 is configured to facilitate the coupling of the connector casing 100 with the connector for rigid monoconductor 200, to establish an electrical link with the battery and realize a "rapid" charge. In particular, the second coupling structure 113 comprises a first partition 115, and a second partition 117 surrounding the first partition 115. The first 115 and the second partition 117 project from the surface 107 of the second side 103 in the coupling direction A. The interstitial space 119 between the first 115 and the second partition 117 is configured to receive the front end part 207 of the connector for rigid monoconductor 200, in which the rigid monoconductor terminals 209 are disposed (see figure 3).

Inside the area delimited by the first partition 115, two openings 121 are disposed. Each of the openings 121 gives access to a respective cavity 123. The cavities 123 pass through the connector casing from the first side 101 to the second side 103, extending along the coupling direction A. Each cavity 123 is configured to receive an electrical terminal 300 in the coupling direction A, and will be more fully described in reference to figure 3. The connector casing 100 moreover comprises fixing inputs 125 for an actuator, for example for a locking system with the homologous connector, and electronic interface structures 127 for signalling connections.

The connector for rigid monoconductor 200 comprises a connector casing for rigid monoconductor 201, which envelopes the ends of a set of rigid monoconductors. In the present embodiment, the set of rigid monoconductors comprises two rigid monoconductors 400a, 400b, each with a circular cross-section and equipped with an insulation mantle. In variants, the rigid monoconductors can be non-insulated and/or have a rectangular cross-section.

The connector casing for a rigid monoconductor 201 is substantially L-shaped, or has a 90° angle. Thus, the connector casing comprises an open rear end part 203 which receives the rigid monoconductors 400a, 400b and which is equipped with a cap 205. Complementarily, the connector casing for a rigid monoconductor 201 comprises an open front end part 207, wherein the respective terminals 209 of the rigid monoconductors 400a, 400b are disposed (see figure 3).

Figure 2 illustrates an electrical terminal 300 for the electrical connector 1 of the first embodiment. The electrical terminal 300 at the same time also itself represents an electrical terminal according to a second embodiment of the invention. The electrical terminal 300 is an electrical terminal for a rapid charging terminal of an "FF" or "Combined Combo 2" type connector, and is configured for currents of at least 100A, i.e. the materials chosen for manufacturing the electrical terminal 300 are adapted to resist the thermal, mechanical and electrical stresses induced by the passage of currents of at least 100A.

The electrical terminal 300 is a metal integral part having a mainly cylindrical extended shape. In particular, the electrical terminal 300 comprises, in the coupling direction A, a first part 301 and a second part 303. The first 301 and the second part 303 are disposed concentrically and connected in a connecting region 305. The first part 301 has a first diameter D1 and the second part 303 has a second diameter D2. The second diameter D2 is between 20% and 200%, preferably between 50% and 70%, larger than the first diameter D1.

The first part 301 comprises a first end 307 of the electrical terminal 300. The second part 303 comprises a second end 309 of the electrical terminal opposite the first end 307. For reasons of workability and electrical safety, the electrical terminal 300 comprises an insulating tip 311 mounted on the first part 301 at the first end 307.

At the second end 309, the electrical terminal 300 comprises a nut 313. The nut 313 is disposed in a cavity 315 formed coaxially in the second part 303. The nut 313 comprises a threading 317, the electrical terminal 300 can be screwed on a screw, a bolt or another device comprising an outer thread complementary to the threading 317.

The first part 301 comprises, at the connecting region 305, a clamping element 319. In this embodiment, the clamping element 319 is a local deformation of the circular cross-section of the first part 301, capable of supporting clamping torques. In this embodiment, the circular cross-section of the first part 301 is deformed towards an enlarged pentagonal cross-section P to form the clamping element 319. The clamping element 319 serves to facilitate the screwing and the unscrewing of the electrical terminal 300 by means of a dedicated clamping tool. For example, the dedicated clamping tool can be slipped over the first part 301 in the coupling direction A, in order to engage the pentagonal shape of the clamping element 319 with a complementary pentagonal shape of the tool.

The second part 303 of the electrical terminal 301 comprises a projecting part 321, also cylindrical, arranged at the connecting region 305 and projecting from the second part 303. The projecting part 321 projects perpendicularly to the coupling direction A. Thus, the projecting part 321 forms a step shape 323. The projecting part 321 has a larger diameter D3, in particular between 2% and 10% larger, than the diameter D2 of the second part 303. An O-ring 325 is disposed along a circumference of the cylindrical outer surface 327 of the projecting part 321.

Figure 3 illustrates a transverse view of the electrical connector 1 in a final assembly state. The transverse view of figure 3 corresponds to a transverse view along the cross-section line C such as indicated in figure 1, after the coupling of the connector for a rigid monoconductor 200 with the second coupling structure 113. In particular, the connector for a rigid monoconductor 200 is moved closer, in the direction B opposite the coupling direction A, towards the second side 103 of the connector casing 100, until the front end part 207 is coupled with the second coupling structure 113.

The transverse view of figure 3 shows that the front end part 207 comprises a coupling seal 211 making it possible to seal the coupling when the front end part 207 is inserted in the interstitial space 119 between the partitions 115, 117 of the second coupling structure 113. A rear seal 213 allows a sealing of the opening of the rear end part 203 which is closed by the cap 205.

Figure 3 shows that the connector casing for rigid monoconductor 201 envelopes an inner casing 215 housing the rigid monoconductor terminals 209 of the respective rigid monoconductors 400a, 400b. The two respective terminals 209 of the rigid monoconductors 400a, 400b are identical, and only one will be described below.

The terminal 209 corresponds to a flattened end 401b (and/or 401a) of a rigid monoconductor 400b (respectively 400a), wherein a hole 217 has been formed, the hole 217 passing through said end 401b in the coupling direction A. The terminal 209 comprises a screw 219, inserted in the hole 217 in the direction B opposite the coupling direction A, and welded to the end 401b of the rigid monoconductor 400b, at the abutment interface 11. The screw 219 comprises a threaded part 221 configured to be coupled with the threading 317 of the nut 313. The screw 219 also comprises an insulating socket 223 to increase the workability and electrical safety of the connector for rigid monoconductor 200.

The transverse view of figure 3 shows that the cavities 123 extend through the connector casing 100, along the coupling direction. In particular, the cavities 123 extend from a first coupling structure 129 arranged on the first side 101, to the second coupling structure 113. The first coupling structure 129 comprises, on the first side and correspondingly to the second coupling structure 113, a first partition 131, and a second partition 133 surrounding the first partition 131. The interstitial space 135 between the two partitions 131, 133 is configured to receive a complementary element of the movable homologous connector. Moreover, figure 3 shows that the first side 131 comprises, correspondingly to the second side 103, an outer coupling zone 137 for the slow recharging terminal.

In the final state illustrated in figure 3, the electrical terminals 300 are arranged in the respective cavities 123. In particular, the electrical terminals 300 are inserted in the coupling direction A, then screwed with the respective screws 219 of the rigid monoconductor terminals 209. In particular, the electrical terminals 300 are screwed in the direction of rotation R, moving progressively closer the electrical terminals 300 in the coupling direction A and the connector for rigid monoconductor 200 in the direction B opposite the coupling direction A.

The movement in the coupling direction A of the electrical terminals 300 is blocked by the projection 139 projecting into the cavity 123. The projection 139 projects into the cavity 123 with a step shape141 complementary to the step shape323 of the projecting part 321 of the electrical terminal 300. Thus, the step shape141 of the projection 139 of the casing 100 and the step shape323 of the projecting part 321 of the electrical terminal 300 abut at the interface I2 during the screwing of the electrical terminal 300 with the rigid monoconductor terminal 209, forming a connection by form-fitting blocking the movement of the electrical terminal 300 in the cavity 123 in the coupling direction A.

A continuation of the screwing movement in the direction of rotation R thus moves closer the connector for rigid monoconductor 200 in the direction B, until the abutment I3 of the second end 309 of the electrical terminal 300 on the end 401a (or 401b) of the rigid monoconductor 400a (respectively 400b). Thus, the screwing of the electrical terminal 300 with the rigid monoconductor terminal 209 clamps the connector casing 100 between the electrical terminal 300 and the connector for rigid monoconductor 200. In particular, the screwing of the electrical terminal 300 with the rigid monoconductor terminal 209 clamps the part P of the connector casing 100 between the interface I2 on one hand, and the interface I4 between the connector for rigid monoconductor 200 and the surface 107 on the other hand.

The O-ring 325 ensures the sealing of the arrangement of the electrical terminal 300 and the connector casing 100, in particular between the outside and the inside of the chassis. At the step shapes323, 141, the electrical terminal 300 and the connector casing 100 are in contact or in immediate proximity. These regions are thus suitable for the placement, in the connector casing 100, of elements for monitoring or for measuring the electrical terminal 300, such as temperature sensors of the electrical terminal 300.

The electrical terminal 300 is screwed from the first side 101 of the casing 100, from the outside of the chassis, through the connector casing 100, with the rigid monoconductor terminal 209 localised on the second side of the casing 203, inside the chassis. The electrical terminal 300 can thus be exchanged rapidly and effectively, by an unscrewing and screwing operation performed outside of the chassis of the vehicle. In particular, it is not necessary to open, change, or handle the connector casing 100, and it is not necessary, in particular, to access the rigid monoconductor terminal 209 inside the chassis or to handle the rigid monoconductors 400a, 400b.

The electrical connector 1 according to the invention moreover has an increased electrical performance, with respect to the solutions of the prior art, such as ultrasonic welding or riveting, of the electrical terminals with the rigid monoconductors. Indeed, welding and riveting generally require the interposition of a metal square or of another intermediate conductive part between the electrical terminal and the rigid monoconductor terminal. The interposition of intermediate parts creates contact interfaces which increase the electrical resistance of the circuit, and thus cause heat losses. At the same time, the omission of the intermediate part makes the assembly quicker and less expensive.

The separability of the electrical terminals 300 from the rigid monoconductors 400a, 400b and from the connector casing 100 also enables a greater flexibility in the assembly of the vehicle. The connector casing 100, which typically is particularly heavy, and the rigid monoconductors 400a, 400b can be assembled and mounted at the chassis of the vehicle independently, in a chosen order.

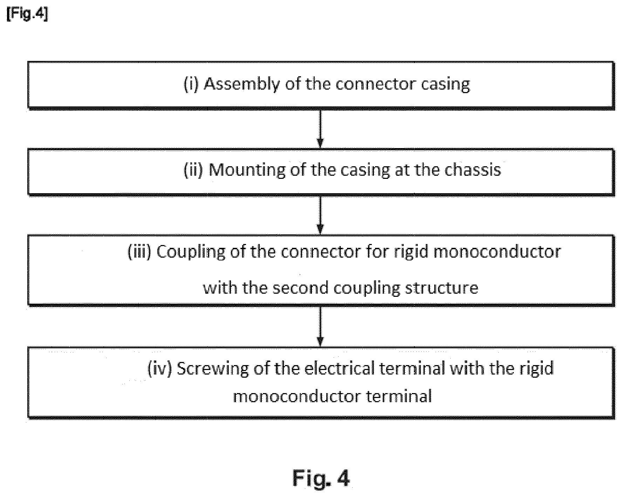

Figure 4 schematically represents the steps of an assembly method according to a third embodiment of the invention. The method of figure 4 illustrates the steps of assembling the charging input electrical connector 1 for a vehicle described above, comprising the charging casing 100, the connector for a rigid monoconductor 200, and the electrical terminals 300.

Such as illustrated in figure 4, the assembly method starts with a step i) of assembling together the connector casing 100. In step i), the connector casing 100 is assembled such as described in reference to figures 1 and 3, so as to have the coupling structures 113, 129, on the respective sides 103, 101, and the cavity 123 connecting the sides 101, 103. Following this step, the connector 100 is separate from the connector for a rigid monoconductor 200 and from the electrical terminals 300.

In a second step ii), the connector casing 100 is mounted at a chassis of the vehicle, such that the second side 103 is oriented towards the inside of the chassis, the surface 105 being oriented in the coupling direction. For example, the connector casing 100 can be mounted to the chassis by means of the mounting frame 109, fixing holes 109a, and fixing studs 127. The connector casing 100 is thus ready to be coupled with the connector for a rigid monoconductor 200.

Thus, in a third step iii), the connector for rigid monoconductor 200 is coupled with the connector casing 100 by moving closer the connector for rigid monoconductor 200, in the direction B opposite the coupling direction A. The connector for rigid monoconductor 200 is moved closer to the second coupling structure 113 until the coupling seal 211 of the connector for rigid monoconductor 200 is firmly housed in the interstitial space 119 of the second coupling structure 113.

The method of the third embodiment comprises a fourth characterising step iv), according to which the electrical terminal 300 is screwed with the rigid monoconductor terminal 209, so as to clamp at least one part of the connector casing 100 between the electrical terminal 300 and the connector for rigid monoconductor 200. In particular, the electrical terminal 300 is inserted in the cavity 123 of the first side 101 in the coupling direction A, such that the insulating socket 223 is housed in the nut and the respective threads 221, 317 are engaged. The screwing comprises a rotation R of the electrical terminal 300 about its axis, first moving closer the electrical terminal 300 in the coupling direction A up to the abutment I2, and then moving closer the connector for rigid monoconductor 200 in the direction B up to the abutment I1. This method enables a particularly rapid and flexible assembly of a vehicle charging input electrical connector, and in particular, offers the advantages obtained by the implementation of the connector 1, in particular a maintenance facilitated by exchangeable electrical terminals 300.

### References to the drawings

1 vehicle charging input electrical connector
100 connector casing
101 first side
103 second side
105 surface on first side
107 surface of the second side
109 mounting frame
109a fixing holes
111 inner coupling zone for the slow recharging terminal
113 second coupling structure
115 first partition (second structure)
117 second partition (second structure)
119 interstitial space between partitions (second structure)
121 opening to the cavity
123 cavity
125 actuator fixing inputs
127 electronic interface structures
129 first coupling structure
131 first partition (first structure)
133 second partition (first structure)
135 interstitial space between partitions (first structure)
137 outer coupling zone for the slow recharging terminal
139 projection into the cavity
141 step shape
200 connector for rigid monoconductor
201 connector casing for rigid monoconductor
203 rear end part
205 cap
207 front end part
209 rigid monoconductor terminal
211 coupling seal
213 rear seal
215 inner casing
217 hole in the terminal
219 screw of the terminal
221 threaded part of the screw
223 insulating socket
300 electrical terminal
301 first part
303 second part
305 connecting region
307 first end
309 second end
311 insulating tip
313 nut
315 cavity housing the nut
317 threading of the nut
319 clamping element
321 projecting part
323 step shape325 seal
327 outer surface of the projecting part
400a, 400b rigid monoconductor
A coupling direction
D1 outer diameter of the first part
D2 outer diameter of the second part
D3 diameter of the projecting part
P pentagonal cross-section
I1 welding interface between the rigid monoconductor end and the screw
I2 abutment between the electrical terminal and the connector casing
I3 abutment between the electrical terminal and the connector for rigid monoconductor
I4 interface between the connector for rigid monoconductor and the connector casing
P clamped part R direction of rotation of screwing
x,y,z Cartesian directions

## Claims

1. Charging input electrical connector (1) for a vehicle, the electrical connector (1) being configured to receive, in a coupling direction (A), a movable homologous connector of a charging station,
the electrical connector (1) comprising a connector casing (100), a connector for rigid monoconductor (200), and an electrical terminal (300), in particular an electrical terminal (300) configured for electrical currents of at least 100A,
the connector casing (100) having a first side (101) and a second side (103) opposite the first side (101), the connector casing (100) being configured to be arranged at a chassis of the vehicle, such that the second side (103) is oriented towards the inside of the chassis,
the first side (101) comprising a first coupling structure (129) configured for a coupling of the connector casing (100) with the homologous connector, and the second side (103) comprising a second coupling structure (113) configured for a coupling of the connector casing (100) with the connector for a rigid monoconductor (200),
the connector casing (100) comprising a cavity (123) extending in the coupling direction (A) from the first coupling structure (129) to the second coupling structure (113), the electrical terminal (300) being arranged in the cavity (123),
the connector for rigid monoconductor (200) comprising a rigid monoconductor terminal (209),
**characterised in that** the electrical terminal (300) is screwed with the rigid monoconductor terminal (209) so as to clamp at least one part of the connector casing (100) between the electrical terminal (300) and the connector for rigid monoconductor (200).

2. Electrical connector according to claim 1, wherein the rigid monoconductor terminal (209) comprises a screw (219) and the electrical terminal (300) comprises a nut (313) configured to receive the screw (219), and the electrical terminal (300) is screwed with the rigid monoconductor terminal (209) by screwing the nut (313) on the screw (219).

3. Electrical connector according to claim 2, wherein
the electrical terminal (300) comprises a first part (301) having a first end (307) of the electrical terminal (300), and a second part (303) having a second end (309) of the electrical terminal (300), the second end (309) being opposite the first end (307),
the first part (301) of the electrical terminal (300) being configured to come into contact with a homologous electrical terminal of the homologous electrical connector,
the nut (313) being arranged at the second end (309).

4. Connector according to claim 3, wherein the smallest outer diameter (D2) of the second part (303) is larger, in particular between 20% and 200% larger, than the largest outer diameter (D1) of the first part (301).

5. Connector according to claim 4, wherein the second part (303) comprises a projecting part (321), the projecting part (321) having a larger diameter (D3), in particular between 2% and 10% larger, than the smallest outer diameter (D2) of the second part (303).

6. Connector according to claim 5, wherein the projecting part (321) projects from the second part (303), at least on the side oriented towards the second end (309), in step shape (323), in particular, perpendicularly.

7. Connector according to claim 5 or 6, wherein the at least one part of the clamped connector casing (100) comprises a shape (141) complementary to the step shape (323), the complementary shape (141) projecting into the cavity (123) so as to establish a connection by form-fitting with the electrical terminal (300), in particular, such that the connection by form-fitting blocks a movement of the electrical terminal (300) in the coupling direction (A).

8. Connector according to one of claims 5 to 7, wherein the projecting part (321) is arranged in a region (305) for connecting the second part (303) with the first part (301).

9. Electrical terminal for a connector according to one of claims 1 to 8, in particular configured for electrical currents of at least 100A, the electrical terminal (300) comprising a nut (313), a first part (301), and a second part (303),
the first part (301) having a first end (307) of the electrical terminal (300), and the second part (303) having a second end (309) of the electrical terminal (300), the second end (309) being opposite the first end (307),
the first part (301) of the electrical terminal (300) being configured to come into contact with a homologous electrical terminal of the homologous electrical connector, and
the nut (313) being arranged at the second end (209).

10. Method for assembling a charging input electrical connector (1) for a vehicle according to one of claims 1 to 8, comprising the steps of
a) assembling the connector casing (100),
b) mounting the connector casing (100) at the chassis of the vehicle, such that the second side (103) is oriented towards the inside of the chassis,
c) coupling the connector for rigid monoconductor (200) with the second coupling structure (113), and
d) screwing the electrical terminal (300) with the rigid monoconductor terminal (209), so as to clamp at least one part of the connector casing (100) between the electrical terminal (300) and the connector for rigid monoconductor (200).
